# EUROPEAN PATENT SPECIFICATION

(11) **EP 3 636 386 B1**
(45) Date of publication and mention of the grant of the patent: **14.04.2021**
(21) Application number: 19202582.3
(22) Date of filing: 10.10.2019
(51) Int. Cl.: B23Q 3/06, B21D 43/00, B21D 43/28, B25B 1/20, B23Q 7/04

(54) **WORK CENTRE TO PROCESS SECTION BARS MADE OF ALUMINIUM LIGHT ALLOYS PVC OR THE LIKE**
BEARBEITUNGSZENTRUM FÜR PROFILE AUS ALU, PVC ODER LEICHTWERKSTOFFEN
CENTRE D'USINAGE POUR PROFILES EN ALUMINIUM, PVC OU ALLIAGES LEGERS

(30) Priority: 10.10.2018 IT 201800009312
(43) Date of publication of application: 15.04.2020
(73) Proprietor: F.O.M. Industrie S.r.l., 47841 Cattolica (IT)
(72) Inventor: LATTANZI, Lorenzo, 61121 PESARO (PU) (IT)
(74) Representative: Manconi, Stefano

(56) References cited:
- EP-A1- 1 040 891
- DE-A1- 19 735 069
- IT-A1-201700 032 903

## Description

### TECHNICAL FIELD

The present invention relates to a work centre to process aluminium section bars, light alloys, PVC or the like, according to the preamble of claim 1 (see for example IT201700032903 A1).

### BACKGROUND ART

In the section bar processing field, it is known to provide a work centre of the type comprising an elongated base extending in a first substantially horizontal direction; a plurality of crosspieces, each of which is mounted on the base parallel to a second direction substantially horizontal and transverse to the first direction, is movable along the base in the first direction and supports at least one holding unit designed to retain at least one section bar; and an overhead crane, which extends above the base in the second direction, is provided with an operating head for processing (for example cutting and/or milling) the section bars, and is movable along the base in the first direction.

Each holding unit comprises a pair of jaws movable with respect to one another along the relative crosspiece in the second direction between a locking position and a release position of at least one section bar, and a support roller, which extends through the two jaws in the second direction, and defines, together with the other support rollers, a support plane for the section bar.

The two jaws project upwards from the support roller, which is mounted to rotate, with respect to the crosspiece, about a rotation axis parallel to the second direction.

When the section bar has a height, measured perpendicularly to the supporting surface, which is smaller than the height of the jaws, also measured perpendicularly to the supporting surface, the section bar is placed above a spacer, which is mounted between the support roller and the section bar to prevent the jaws from protruding upwards from the section bar and interfering with the operating head during the processing of the section bar.

Known work centres of the type described above have some drawbacks mainly due to the fact that the aforementioned spacers are relatively expensive, require storage spaces when unused, involve relatively long machining centre setup times and can compromise the integrity of the section bars when the section bars and the crosspieces are mutually moved in the first direction.

### DISCLOSURE OF INVENTION

The object of the present invention is to provide a work centre to process section bars made of aluminium, light alloys, PVC or the like, which is free from the aforementioned drawbacks and which is simple and inexpensive to implement.

According to the present invention, a work centre is provided to process section bars made of aluminium, light alloys, PVC or the like as claimed in the appended claims.

### BRIEF DESCRIPTION OF THE DRAWINGS

The present invention will now be described with reference to the annexed drawings showing a non-limiting embodiment, wherein:
Figure 1 is a schematic perspective view, with parts removed for clarity's sake, of a preferred embodiment of the work centre of the present invention;
Figures 2 and 3 are two schematic perspective views, with parts removed for clarity's sake, of a detail of the work centre of Figure 1 shown in two different operating positions; and
Figures 4, 5, 6, and 7 are four schematic perspective views, with parts removed for clarity's sake, of a detail of Figures 2 and 3.

### BEST MODE FOR CARRYING OUT THE INVENTION

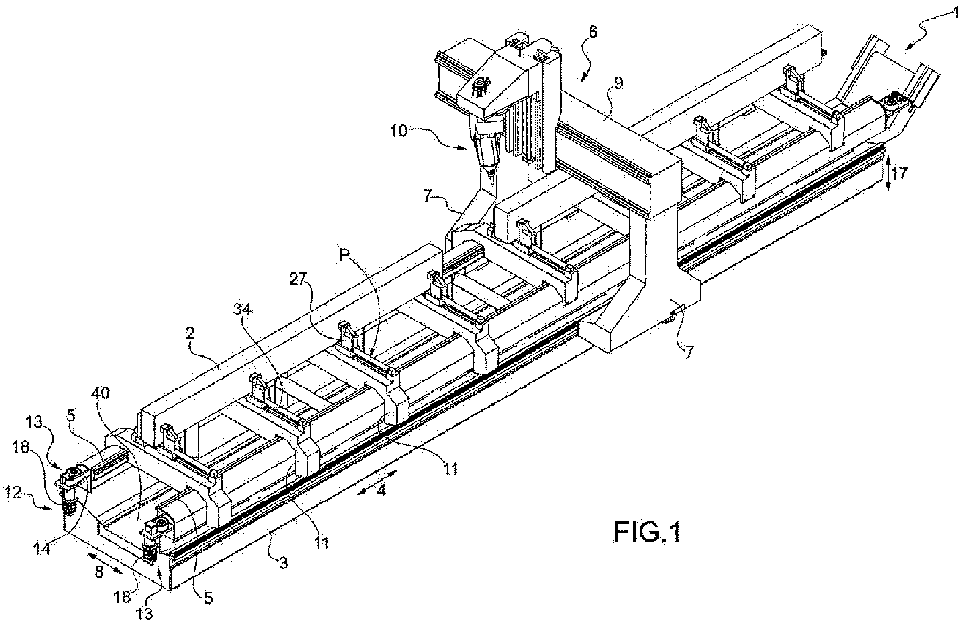

With reference to Figures 1, 2, and 3, the reference number 1 indicates, as a whole, a work centre to process section bars 2 made of aluminium, light alloys, PVC or the like with an elongated shape.

The work centre 1 comprises an elongated base 3, which extends in a horizontal direction 4, is substantially U-shaped and is provided with two longitudinal guide members 5 parallel to the direction 4.

The work centre 1 further has an overhead crane 6 comprising a pair of vertical uprights 7, which are arranged on opposite sides of the base 3 in a horizontal direction 8 transverse to the direction 4, and are coupled in known manner to the base 3 to perform linear movements along the base 3 in the direction 4.

The two uprights 7 carry a crosspiece 9 connected to their free ends, which extends above the base 3 in the direction 8 and supports an operating head 10 of a known type coupled in a known manner to the crosspiece 9 to perform linear movements along the crosspiece 9 in the direction 8.

The head 10 is configured to perform machining operations, such as milling and/or drilling and/or cutting, of section bars 2.

The work centre 1 further has a plurality of crosspieces 11, which extend between the longitudinal members 5 in the direction 8 and are slidably coupled to the longitudinal members 5 to be moved by an actuation device 12 along the longitudinal members 5 in the direction 4.

The device 12 comprises two parallel belt conveyors 13, which extend in the direction 4 and are mounted on opposite sides of the two longitudinal members 5 in the direction 8. Each conveyor 13 comprises a belt 14 wound in a ring about a pair of transmission pulleys 15 mounted to rotate about respective rotation axes 16 parallel to each other and to a vertical direction 17 orthogonal to the directions 4 and 8. In the case shown in Figures 1, 2 and 3, each conveyor 13 is provided with an operating motor 18 designed to rotate the relative pulleys 15 about the axes 16.

According to a variant not shown, the device 12 comprises a single operating motor connected with the pulleys 15 of one of the conveyors 13 and a system for transmitting the motion to the pulleys 15 of the other conveyor 13.

Each crosspiece 11 is provided with two fastening devices 19 movable between respective locking positions and respective release positions of the crosspiece 11 to the belts 14 and with two locking devices 20 movable between respective locking positions and respective release positions of the crosspiece 11 on the longitudinal members 5.

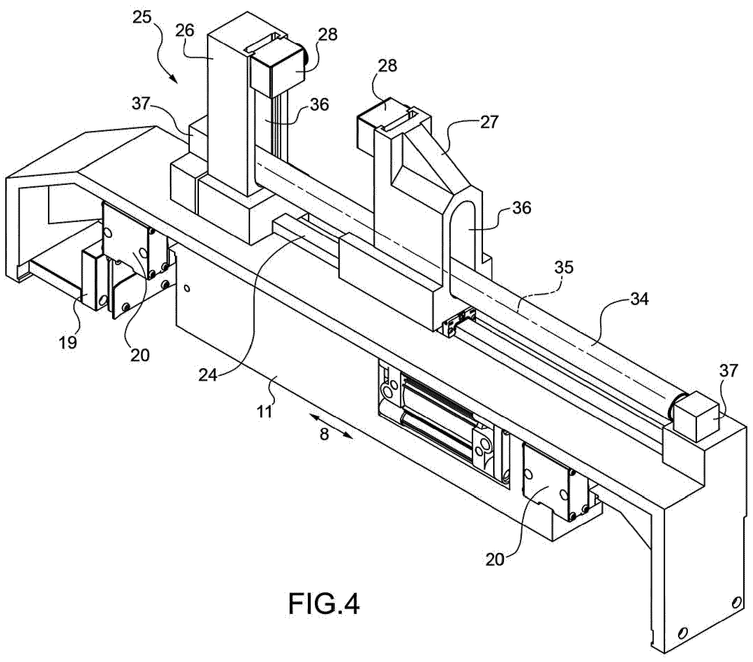

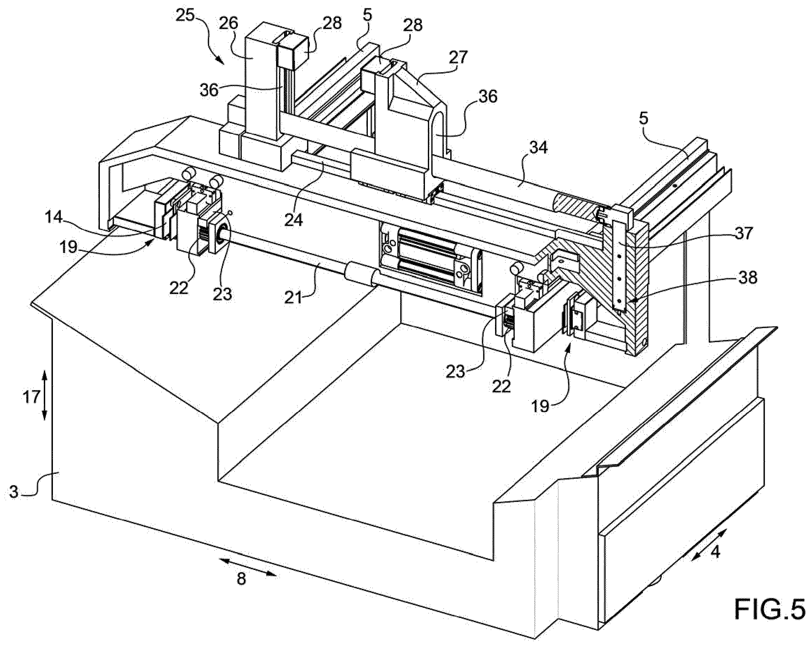

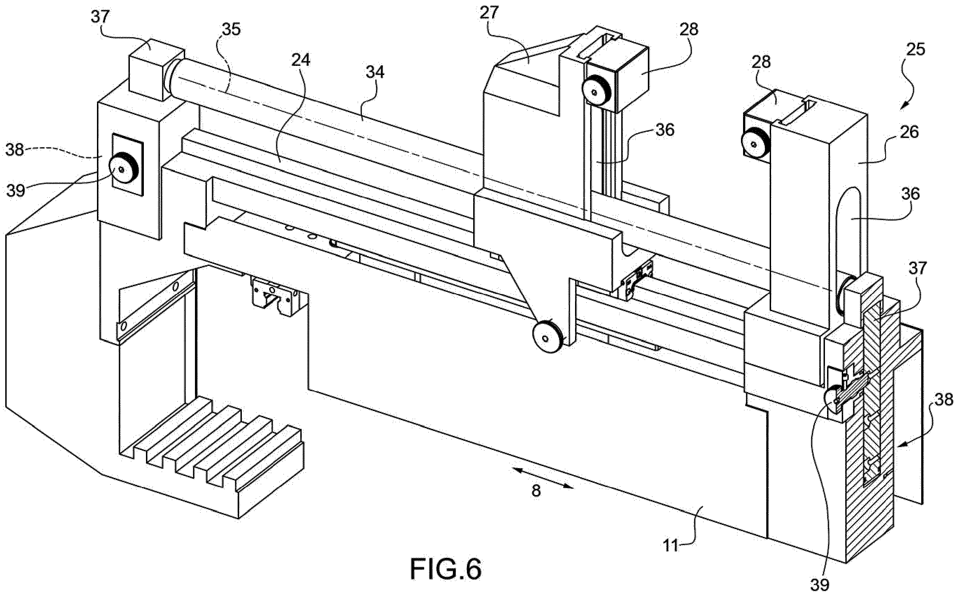

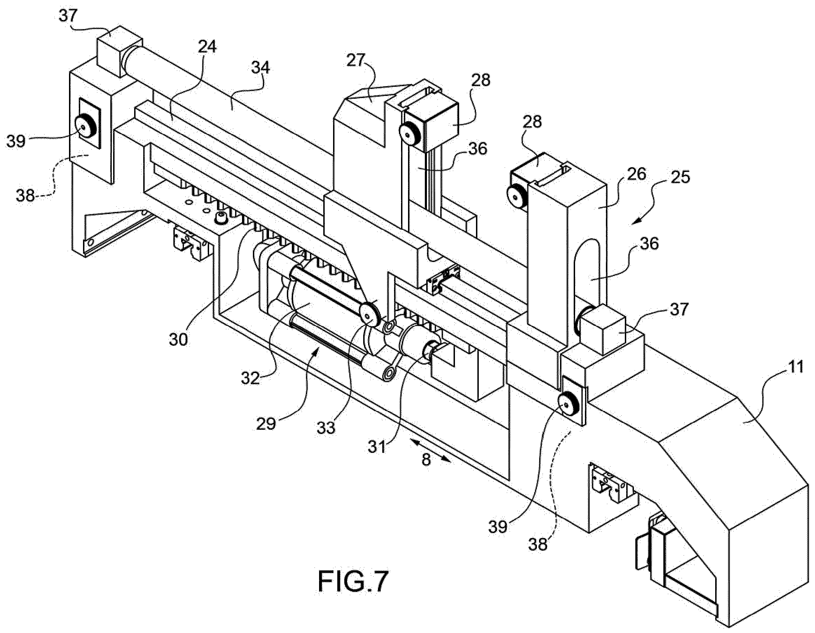

As shown in Figures 4 to 7, the correct position of each crosspiece 11 on the longitudinal members 5 is controlled by a torsion shaft 21, which is mounted on the crosspiece 11 parallel to the direction 8, and is rotatably coupled to the crosspiece 11 to rotate, with respect to the crosspiece 11, about a rotation axis parallel to the direction 8.

The shaft 21 is provided with two gears 22, which are mounted on the free ends of the shaft 21 and are coupled with respective racks 23 fixed to the longitudinal members 5 parallel to the direction 4.

Each crosspiece 11 is provided with a rectilinear guide 24 fixed on an upper face of the crosspiece 11 parallel to the direction 8, and supports a clamping vise 25 comprising two gripping jaws 26, 27.

The jaws 26, 27 extend upwards from the crosspiece 11 in the direction 17, and each is provided with a respective pad 28 made of elastically deformable material, which faces the pad 28 of the other jaw 26, 27 and is slidably coupled to the jaw 26, 27 to be moved manually along the jaw 26, 27 in the direction 17.

In this case, the jaw 26 is fixed to a free end of the guide 24 and the jaw 27 is slidably coupled to the guide 24 to perform linear movements in the direction 8 between a locking position and a release position of a section bar 2. The jaw 27 is moved along the guide 24 by an actuation device 29 comprising a rack 30, which extends along the crosspiece 11 in the direction 8, is slidably coupled to the crosspiece 11 and is connected to an output rod 31 of an actuator cylinder 32 fixed to the crosspiece 11 parallel to the direction 8.

The jaw 27 is blocked on the rack 30 by means of a locking pin 33, whose disengagement from the rack 30 allows moving selectively the jaw 27 along the rack 30 in the direction 8.

Each vise 25 further comprises a support roller 34, which is mounted to rotate about a rotation axis 35 parallel to the direction 8, and defines, together with the rollers 34 of the other vises 25, a support plane P for a section bar 2.

The roller 34 extends through two slits 36 formed through the relative jaws 26, 27 in the direction 8, is substantially aligned with the relative guide 24 in the direction 17 and is rotatably coupled to the free ends of the output rods 37 of two actuator cylinders 38 formed in the relative crosspiece 11.

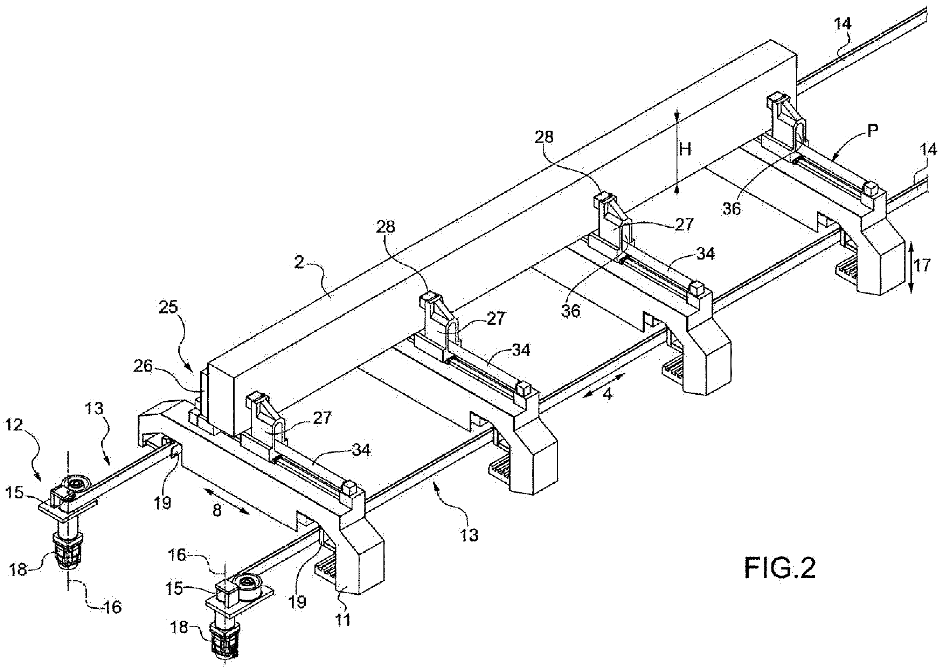

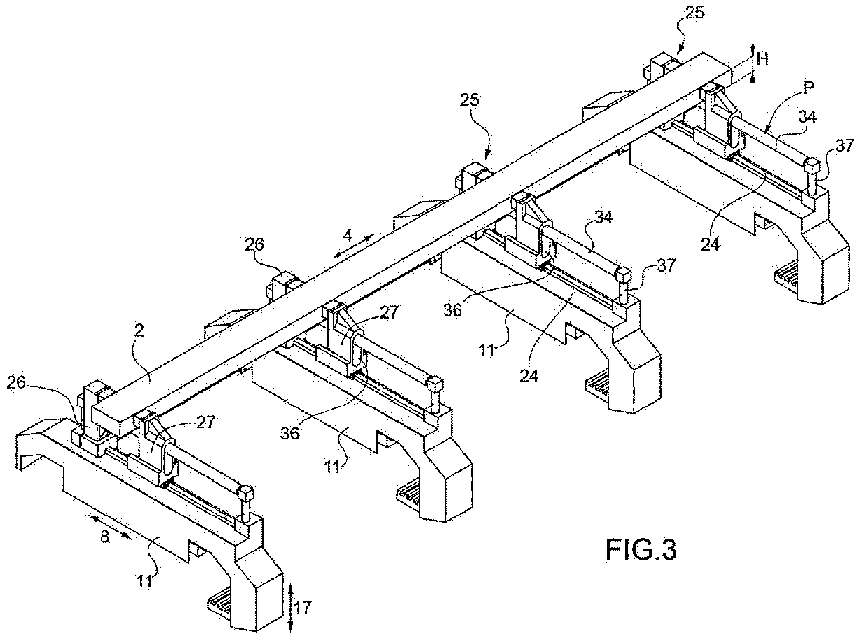

The roller 34 is moved by the cylinders 38 in the direction 17 between a lowered position (Figure 2) and a plurality of raised positions (one of which shown in Figure 3) based on a height H of the section bar 2 measured parallel to the direction 17.

Each rod 37 is locked in the lowered position and in the raised positions of the roller 34 by a locking pin 39, which extends through the crosspiece 11 in the direction 4, and is manually moved by an operator between a locking position and a release position of the rod 37.

According to a variant not shown, the cylinders 38 exert an upward thrust on the roller 34 equal to the weight force acting on the roller 34, which is manually moved in a relatively simple manner between its lowered position and its raised positions.

According to a further variant not shown, each roller 34 is removed and replaced with a support bar limited by a substantially flat upper face provided with a plurality of blowing holes connectable with a compressed-air pneumatic device.

The base 3 further supports a belt conveyor 40, which extends between the two longitudinal members 5 beneath the crosspieces 11, and is motorized to remove machining scraps and/or chips produced by the operating head 10 while processing the section bars 2.

The work centre 1 has some advantages, mainly due to the fact that the displacement of the support rollers 34 between their lowered and raised positions allows a selective control of the position of the plane P based on the height H of the section bars 2 so as to avoid that the jaws 26, 27 project upwards from the section bars 2 in the direction 17 and interfere with the operating head 10.

## Claims

1. A work centre to process section bars (2) made of aluminium, light alloys, PVC or the like comprising an elongated base (3) extending in a first direction (4); a plurality of crosspieces (11), each of which is mounted on the base (3) parallel to a second direction (8) transverse to the first direction (4), is movable along the base (3) in the first direction (4) and supports at least one holding unit (25) designed to hold at least one section bar (2) made of aluminium, light alloys, PVC or the like; and an overhead crane (6), which extends above the base (3) in the second direction (8), is provided with an operating head (10) to process the section bars (2) and is movable along the base (3) in the first direction (4); each holding unit (25) comprising a pair of jaws (26, 27) movable relative to one another along the relative crosspiece (11) in the second direction (8) between a locking position and a release position of at least one section bar (2), and a support bar (34), which extends through at least one of the jaws (26, 27) in the second direction (8) and is configured to define a support surface (P) for the section bar (2); and **characterized in that** the support bar (34) is mounted to move, relative to the two jaws (26, 27), in a third direction (17) orthogonal to said first and second direction (4, 8) and to the support surface (P).

2. A work centre according to claim 1, wherein the support bar (34) is delimited by a substantially flat upper surface, which defines the support surface (P) and has a plurality of blowing holes designed to be connected to a compressed-air pneumatic device.

3. A work centre according to claim 1, wherein the support bar (34) has a cylindrical shape and is mounted so as to rotate, relative to the two jaws (26, 27), about a rotation axis (35) parallel to the second direction (8).

4. A work centre according to any one of the preceding claims and further comprising for each holding unit (25) a respective operating device to move the relative support bar (34) in the third direction (17).

5. A work centre according to claim 4, wherein the operating device comprises at least one actuator cylinder (38) provided with an output rod (37) connected to the support bar (34) and movable in the third direction (17).

6. A work centre according to claim 5, wherein the holding unit (25) comprises, for each actuator cylinder (38), a respective locking device (39) to lock the output rod (37) in the third direction (17).

7. A work centre according to any one of the preceding claims and further comprising for each holding unit (25) a respective thrusting device configured to exert upon the relative support bar (34) a thrust, which is substantially equal and opposite to a weight force acting upon the support bar (34).

8. A work centre according to any one of the preceding claims, wherein each support bar (34) extends through the relative jaws (26, 27); each jaw (26, 27) having a slit (36), which is slidingly engaged by the support bar (34) in the third direction (17).

9. A work centre according to any one of the preceding claims, wherein each crosspiece (11) is provided with an elongated guide (24), which extends in the second direction (8), is slidingly engaged by at least one of the relative jaws (26, 27) and is aligned with the relative support bar (34) in the third direction (17).

10. A work centre according to any one of the preceding claims and further comprising an actuator device (12) to move the crosspieces (11) along the base (3) in the first direction (4).

11. A work centre according to claim 10 and further comprising for each crosspiece (11) a respective fastening device (19) to fasten the crosspiece (11) to the actuator device (12) and a respective locking device (20) to lock the crosspiece (11) on the base (3).

## Patentansprüche

1. Arbeitszentrum bzw. Workcenter zum Verarbeiten von Querschnitts- bzw. Profilstangen (2) aus Aluminium, Leichtmetalllegierungen, PVC oder dergleichen, umfassend eine längliche Basis (3), die sich in einer ersten Richtung (4) erstreckt; eine Mehrzahl von Querstücken (11), von denen jedes an der Basis (3) parallel zu einer zweiten Richtung (8) quer zu der ersten Richtung (4) montiert ist, entlang der Basis (3) in der ersten Richtung (4) beweglich ist und zumindest eine Halteeinheit (25) stützt bzw. trägt, die ausgelegt ist, zumindest eines Querschnitts- bzw. Profilstange (2) aus Aluminium, Leichtmetalllegierung, PVC oder dergleichen zu halten; und einen Brückenkran (6), der sich über der Basis (3) in der zweiten Richtung (8) erstreckt, mit einem Betätigungskopf (10) versehen ist, um die Profilstangen (2) zu verarbeiten, und entlang der Basis (3) in der ersten Richtung (4) beweglich ist; wobei jede Halteeinheit (25) ein Paar Backen (26, 27), die relativ zueinander entlang des relativen Querstücks (11) in der zweiten Richtung (8) zwischen einer Verriegelungsposition und einer Freigabeposition von zumindest einer Profilstange (2) beweglich sind, und eine Stütz- bzw. Trägerstange (34) umfasst, die sich durch zumindest eine der Backen (26, 27) in der zweiten Richtung (8) erstreckt und konfiguriert ist, eine Stütz- bzw. Trägerfläche bzw. -oberfläche (P) für die Profilstange (2) zu definieren; und **dadurch gekennzeichnet, dass** die Trägerstange (34) so montiert ist, dass sie sich relativ zu den beiden Backen (26, 27) in einer dritten Richtung (17) orthogonal zu der ersten und zweiten Richtung (4, 8) und zu der Trägerfläche (P) bewegt.

2. Workcenter nach Anspruch 1, wobei die Trägerstange (34) durch eine im Wesentlichen flache obere Fläche bzw. Oberfläche begrenzt ist, welche die Stützfläche (P) definiert und eine Mehrzahl von Blaslöchern aufweist, die ausgelegt sind, mit einer pneumatischen Druckluftvorrichtung verbunden zu sein bzw. zu werden.

3. Workcenter nach Anspruch 1, wobei die Trägerstange (34) eine zylindrische Form aufweist und so montiert ist, dass sie sich relativ zu den beiden Backen (26, 27) um eine Drehachse (35) parallel zu der zweiten Richtung (8) dreht.

4. Workcenter nach einem der vorhergehenden Ansprüche und ferner umfassend, für jede Halteeinheit (25), eine jeweilige Betriebsvorrichtung, um die relative Trägerstange (34) in die dritte Richtung (17) zu bewegen.

5. Workcenter nach Anspruch 4, wobei die Betriebsvorrichtung zumindest einen Aktorzylinder (38) umfasst, der mit einer Ausgangsstange (37) versehen ist, die mit der Trägerstange (34) verbunden und in der dritten Richtung (17) beweglich ist.

6. Workcenter nach Anspruch 5, wobei die Halteeinheit (25) für jeden Aktorzylinder (38) eine jeweilige Verriegelungsvorrichtung (39) umfasst, um die Ausgangsstange (37) in der dritten Richtung (17) zu verriegeln.

7. Workcenter nach einem der vorhergehenden Ansprüche und ferner umfassend, für jede Halteeinheit (25), eine jeweilige Schubvorrichtung, die konfiguriert ist, auf die relative Trägerstange (34) einen Schub auszuüben, der im Wesentlichen gleich und entgegengesetzt zu einer auf die Trägerstange (34) wirkenden Gewichtskraft ist.

8. Workcenter nach einem der vorhergehenden Ansprüche, wobei sich jede Trägerstange (34) durch die relativen Backen (26, 27) erstreckt; wobei jede Backe (26, 27) einen Schlitz (36) aufweist, der von der Trägerstange (34) in der dritten Richtung (17) gleitend in Eingriff genommen ist bzw. wird.

9. Workcenter nach einem der vorhergehenden Ansprüche, wobei jedes Querstück (11) mit einer länglichen Führung (24) versehen ist, die sich in der zweiten Richtung (8) erstreckt, von mindestens einer der jeweiligen Backen (26, 27) gleitend in Eingriff genommen ist bzw. wird und mit der relativen Trägerstange (34) in der dritten Richtung (17) ausgerichtet ist.

10. Workcenter nach einem der vorhergehenden Ansprüche und ferner umfassend eine Aktorvorrichtung (12) zum Bewegen der Querstücke (11) entlang der Basis (3) in der ersten Richtung (4).

11. Workcenter nach Anspruch 10 und ferner umfassend, für jedes Querstück (11), eine jeweilige Befestigungsvorrichtung (19) zum Befestigen des Querstücks (11) an der Aktorvorrichtung (12) und eine jeweilige Verriegelungsvorrichtung (20) zum Verriegeln des Querstücks (11) an der Basis (3).

## Revendications

1. Poste de travail pour traiter des barres profilées (2) faites d'aluminium, d'alliages légers, de PVC ou similaire comprenant une base allongée (3) s'étendant dans une première direction (4) ; une pluralité de traverses (11), dont chacune est montée sur la base (3) parallèlement à une deuxième direction (8) transversale à la première direction (4), est mobile le long de la base (3) dans la première direction (4) et supporte au moins une unité de maintien (25) conçue pour maintenir au moins une barre profilée (2) faite d'aluminium, d'alliages légers, de PVC ou similaire; et un pont roulant (6), qui s'étend au-dessus de la base (3) dans la deuxième direction (8), est pourvu d'une tête d'actionnement (10) pour traiter les barres profilées (2) et est mobile le long de la base (3) dans la première direction (4) ; chaque unité de maintien (25) comprenant une paire de mors (26, 27) mobiles l'un par rapport à l'autre le long de la traverse (11) relative dans la deuxième direction (8) entre une position de blocage et une position de dégagement d'au moins une barre profilée (2), et une barre de support (34), qui s'étend à travers au moins l'un des mors (26, 27) dans la deuxième direction (8) et est configurée pour définir une surface de support (P) pour la barre profilée (2) ; et **caractérisé en ce que** la barre de support (34) est montée pour se déplacer, par rapport aux deux mors (26, 27), dans une troisième direction (17) orthogonale auxdites première et deuxième directions (4, 8) et à la surface de support (P).

2. Poste de travail selon la revendication 1, dans lequel la barre de support (34) est délimitée par une surface supérieure sensiblement plate, qui définit la surface de support (P) et comporte une pluralité de trous de soufflage conçus pour être raccordés à un dispositif pneumatique à air comprimé.

3. Poste de travail selon la revendication 1, dans lequel la barre de support (34) a une forme cylindrique et est montée de façon à tourner, par rapport aux deux mors (26, 27), autour d'un axe de rotation (35) parallèle à la deuxième direction (8).

4. Poste de travail selon l'une quelconque des revendications précédentes et comprenant en outre pour chaque unité de maintien (25) un dispositif d'actionnement respectif pour déplacer la barre de support (34) relative dans la troisième direction (17).

5. Poste de travail selon la revendication 4, dans lequel le dispositif d'actionnement comprend au moins un vérin de manœuvre (38) pourvu d'une tige de sortie (37) raccordée à la barre de support (34) et mobile dans la troisième direction (17).

6. Poste de travail selon la revendication 5, dans lequel l'unité de maintien (25) comprend, pour chaque vérin de manœuvre (38), un dispositif de blocage (39) respectif pour bloquer la tige de sortie (37) dans la troisième direction (17).

7. Poste de travail selon l'une quelconque des revendications précédentes et comprenant en outre pour chaque unité de maintien (25) un dispositif de poussée respectif configuré pour exercer sur la barre de support (34) relative une poussée, qui est sensiblement égale et opposée à une force massique agissant sur la barre de support (34).

8. Poste de travail selon l'une quelconque des revendications précédentes, dans lequel chaque barre de support (34) s'étend à travers les mors (26, 27) relatifs; chaque mors (26, 27) comportant une fente (36), qui est engagée en coulissement par la barre de support (34) dans la troisième direction (17).

9. Poste de travail selon l'une quelconque des revendications précédentes, dans lequel chaque traverse (11) est pourvue d'un guide allongé (24), qui s'étend dans la deuxième direction (8), est engagée en coulissement par au moins l'un des mors (26, 27) relatifs et est alignée avec la barre de support (34) relative dans la troisième direction (17).

10. Poste de travail selon l'une quelconque des revendications précédentes et comprenant en outre un dispositif de manœuvre (12) pour déplacer les traverses (11) le long de la base (3) dans la première direction (4).

11. Poste de travail selon la revendication 10 et comprenant en outre pour chaque traverse (11) un dispositif de fixation (19) respectif pour fixer la traverse (11) au dispositif de manœuvre (12) et un dispositif de blocage (20) respectif pour bloquer la traverse (11) sur la base (3).
